# EUROPEAN PATENT APPLICATION

(11) **EP 3 643 183 A1**
(43) Date of publication of application: **29.04.2020**
(21) Application number: 18202850.6
(22) Date of filing: 26.10.2018
(51) Int. Cl.: A23L 27/00, A23L 27/10, A23L 27/40

(54) **PREPARATIONS WITH C-METHYL FLAVONOIDS**

(71) Applicant: Analyticon Discovery GmbH, 14473 Potsdam (DE); BRAIN AG, 64673 Zwingenberg (DE)
(72) Inventor: Kluge, Grit, 14959 Trebbin (DE); Kunz, Oliver, 14478 Potsdam (DE); Siems, Karsten, 14552 Michendorf (DE); Krohn, Michael, 64653 Lorsch (DE); Riedel, Katja, 64625 Bensheim (DE)
(74) Representative: Fabry, Bernd

(57) **Abstract**

Suggested are preparations, comprising or consisting of
(a) C-methyl flavonoids, a salt of C-methyl flavonoids and/or an extract containing C-methyl flavonoids, and
(b) at least one inorganic salt or mineral substance.

## Description

### FIELD OF THE INVENTION

The invention is in the food sector and relates to new preparations containing C-methyl flavonoids, substances containing these, processes for taste modulation and corresponding uses of these substances.

### STATE OF THE ART

The purchasing and consuming behaviour of consumers has been changing significantly. Overconsumption of sodium, contained as sodium chloride in many food products, is held responsible for many cardiovascular health issues within the modern society. In addition to the reduction of sugar it is therefore desirable to reduce the intake of sodium via foodstuffs. One possibility is the replacement of sodium (especially table salt or sodium chloride) by potassium salts (esp. potassium chloride). Potassium chloride exhibits apart from the salty taste an unpleasant off-taste, which is frequently described as metallic, bitter, chemical and acrid.

For this reason, there is an intensive demand in the market for products, which are increasing the pleasantness of sodium chloride replacers. This includes products, which increase the saltiness or are capable of masking, suppressing or modulating the unpleasant taste impressions of potassium salts, e.g. potassium chloride as well as other chloride salts such as magnesium chlorides, and calcium chlorides, i.e. providing them with a pleasant taste. The scientific literature with a focus on patents about potassium based salt substitutes was reviewed by J. Ranilovic (Comprehensive Reviews in Food Science and Food Safety, 2017, Vol 18, p. 881 - 894) The latter publication states that the room for improvement in the area of taste improving agents is still very large.

Potassium salts are added to foods, but usually not with the intention to balance a potassium deficiency, but as a substitute for salt in order to reduce the sodium content in foods while maintaining the taste of salt. As potassium chloride has an unpleasant side taste, only part of the sodium may be substituted by potassium. In order to reduce the unpleasant taste of potassium chloride, for example, ascorbic acid, fumaric acid and citric acid, or various sugars (lactose, dextrose), or yeast extract may be added (cf. DE3035518C2). However, these solutions are only suitable for some foods, as they are not neutral with regard to their taste or may lead to an increased uptake of calories, which is not desired in sodium-chloride reduced foods, which are, therefore, healthier.

Magnesium is an important mineral substance and is added to foods as a taste molecule as well as a technological additive to reduce sodium content. Another application is under-supply with magnesium which is often not diagnosed, but it may appear as a side effect in many diseases (e.g., diabetes, hypertension). Senior citizens and pregnant women frequently have an increased demand for magnesium. An increased demand for magnesium may be balanced by mineral supplements or by adding magnesium to foods, e.g., bread that is specifically produced for senior citizens. Magnesium is added to food in the form of various salts, e.g., as magnesium chloride, magnesium sulfate, phosphates, carbonates or as carnalite, kainite and schoenite. Magnesium-containing salts taste bitter, particularly magnesium sulfate, which is also referred to as epsomite.

Calcium is an important mineral substance, too, and is added to foods as a taste molecule as well as a technological additive to reduce sodium content. Calcium is added in the form of various salts, e.g. as chlorides, sulphates, phosphates, or carbonates. Calcium containing salts taste unpleasant, particularly calcium chloride.

Chloride is a counterion of important mineral salts, which is added to foods together with potassium, calcium, magnesium or ammonium as a salty taste molecule as well as a technological additive to reduce sodium content. Chloride salts of potassium, calcium and magnesium have an intrinsic saltiness, but also a strong unpleasant side taste.

Taste-modulating natural substances, including, specifically, the so-called "bitter blockers" are already known from the state of the art. For example, DE 10 2012 214560 A1 suggests 1,3-enterodiol compounds for this purpose and EP 1258200A2 suggests flavanones, particularly eriodictyol derivatives. EP 2559346 A1 discloses oleanane triterpene glycosides for the same purpose. The subject-matter of WO 2011 050955 A1 is antagonists and agonists for the human bitter taste receptors TAS2R40, hTAS2R43, hTAS2R44, hTAS2R46 and hTAS2R47, which are also terpene derivatives. WO 2013 072332 A1 reports the use of Hardwickiid acid to counteract the bitter taste.

Thus, the state of the art sufficiently describes the use of natural substances, specifically of phenol derivatives, to counteract, cover, or change undesired taste properties. However, the disadvantages of the compositions mentioned are that they require high quantities, and that they only have very specific effects, particularly with respect potassium chlorides. In the quantities described, these substances also exhibit a taste of their own which adulterates the desired taste experience, usually with a deteriorating effect. In addition, the effectiveness of these active agents strongly depends on the matrix in which they are used. For producers of foods it is, therefore, of great importance to be able to select from a large number of alternative active agents in order to be able to determine the optimal substance for the particular purpose of application.

The object of the present invention was, therefore, to provide a natural substance, which is capable of covering, neutralising, or advantageously changing unpleasant taste impressions of inorganic salts e.g. potassium salts such as chlorides and sulfates as well as other chlorides such as magnesium chloride and calcium chloride, even when present in very small quantities.

The invention provides a natural compound capable of improving the pleasantness of sodium chloride replacers and thereby enables further sodium reduction in food products, which was not possible before.

### DESCRIPTION OF THE INVENTION

A first subject-matter of the invention relates to preparations, comprising or consisting of
(a) C-methyl flavonoids, a salt of C-methyl flavonoids and/or an extract containing C-methyl flavonoids, and
(b) at least one inorganic salt or mineral substance.

Surprisingly, it was found that C-methyl flavonoids fully meet the complex profile of requirements described in the beginning. It improves the taste of inorganic alkali metal salts and alkaline earth metal salts having unpleasant off-flavours like metallic, bitter, acrid or chemical, especially inorganic potassium salts as well as chloride salts. It is a purely plant-based product which is fully effective also in very small concentrations of, for example, 10 µM (3 mg/l), and which thus proves to be superior to alternative prior-art substances.

Taste impressions, particularly unpleasant taste impressions that are intended to be improved within the meaning of the invention are understood as metallic, bitter, chemical and acrid taste sensations. Moreover, pleasant taste impressions, e.g. saltiness or spiciness and flavours are intended to be improved within the meaning of the invention. The overall improvement of unpleasant and pleasant tastes leads to a superior taste impression.

### C-METHYL FLAVONOIDS

C-Methyl flavonoids are flavonoids, carrying an additional methyl group which is linked to the flavonoid scaffold via carbon-carbon bond. This additional methyl group is typically adjacent to one or more phenolic hydroxyl groups. Typical representatives of methyl flavonoids are those from pine trees.

C-Methyl flavonoids are known from different plant families. They are particularly frequent in the plant families Pinaceae, Ericaceae, Myricaceae, Myrtaceae, and Annonaceae.

Typical representatives of C-methyl flavonoids are C-methylated analogs of Quercetin and Dihydroquercetin. There are compounds with one or two methyl groups.

Exemplary structural formula of C-methyl flavonoids belonging to different flavonoid classes (flavone, flavanonol, flavanon):

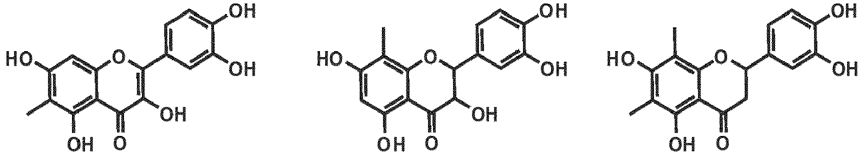

Preferably the C-methyl flavonoids are selected from the group comprising Cedrin, Deodarin, Cedeodarin, Pinoquercetin, 8-C-Methyl-Quercetin, 6-C-Methyl-Quercetin, Pinomyrecetin.

More preferably the C-methyl flavonoids are selected from the group comprising C-methyl flavones, e.g. Pinoquercetin, 8-C-Methyl-Quercetin, Pinomyrecetin, and C-methyl-flavanonols, e.g. Cedrin.

The most preferable C-methyl flavonoids are C-methyl flavones, e.g. Pinoquercetin, 8-C-Methyl-Quercetin, Pinomyrecetin

Instead of using the actual C-methyl flavonoids itself it is also possible to use its salts, specifically its alkali metals salts, alkaline earth metals salts or ammonium salts.

According to the present application extracts containing C-methyl flavonoids can also be used, the preparation of which is known to the skilled person in the art and described by way of example, in example 1 below. Preferably, these extracts contain at least 1% (w/v), more preferably at least 5-50 % (w/v) and particularly preferred about 20 to 50 % (w/v) C-methyl flavonoids.

For the preparation of extracts containing C-methyl flavonoids different plant sources can be used. Preferably the extracts are obtained from the genus *Pinales,* more preferably from the family *Pinaceae* and most preferably from the genus *Pinus.*

The conventional different extraction methods can be used for the preparation of C-methyl flavone containing extracts. Preferably the solvents are selected from the group comprising water, C₁ to C₄-alcohols, acetone, methyl ethyl ketone, ethyl acetate, ^{t}butyl methyl ether, preferably selected from the group comprising water, methanol, ethanol, and acetone. The solvents can be used alone or in a mixture.

### INORGANIC SALTS OR MINERAL SUBSTANCES

According to the present application the inorganic salts or mineral substances are any substances serving as sodium chloride replacers in food products, such as anorganic alkali metal salts as well as alkaline earth metal salts, for example potassium, magnesium and calcium salts and their mixtures.

Preferably the inorganic salts or mineral substances are selected from the group comprising potassium chloride, potassium sulfate, chlorides, sulfates, phosphates, carbonates of magnesium and calcium.

Carnalite, kainite, schoenite and ammonium chloride also belong to the inorganic salts or mineral substances according to the present application.

### PREPARATIONS

According to the present application the preparation comprises component (a) in concentration of from about 0.01 to about 500 ppm, preferably from about 0.05 ppm to about 100 ppm, particularly preferably from about 0.1 to about 50 ppm.

According to the present application the preparation comprises component (b) in concentration of from 0.01 wt% to 5 wt%, preferably from 0.05 wt% to 2 wt%.

According to the present application the preparation comprises components (a) and (b) in the mass ratio of from 1:50 to 1:5000.

A form of preparation which is intended for commercial distribution and which is particularly suitable, for example, in form of a table salt substitute mixture, which contains 20-60 % potassium chloride, 30-70 % sodium chloride, about 10 % other mineral salts like calcium or magnesium as well as other components like.

A further form of preparation which is intended for commercial distribution and which is particularly suitable, for example, in form of a seasoning flavour packages for food products. Such flavour packages contain mineral salts, e.g. sodium chloride; sodium nitrate; sodium sulphate; sodium citrate; sodium-L-lactate; sodium gluconate; sodium glutamate; ammonium chloride; potassium chloride; potassium glutamate; potassium citrate; potassium sulphate; potassium citrates; potassium-L-lactate; potassium formate; potassium succinate; potassium fumarate; carnalite; kainite; schoenite; magnesium chloride; magnesium sulphate; magnesium carbonate; magnesium citrate; magnesium formate; magnesium gluconate; calcium chloride; calcium sulphate; calcium phosphate; calcium carbonate; calcium citrate; calcium formate; calcium gluconate; calcium glutamate; calcium glycerophosphate; essential microminerals such as iron, manganese, copper, zinc and cobalt; seasoning herbs; herbal extracts; vegetables; spices; anticaking agents like silicon dioxide, tricalcium phosphate; carbohydrates, like sucrose, glucose, lactose, fructose, glycerol; sugar alcohols, such as sorbitol, maltitol, lactitol, mannitol, xylitol; sugar substitutes; glycyrrhizin; sodium glycyrrhizinate; high intensity sweeteners, like sucralose, saccharin, aspartame, advantame, acesulfame K, cyclamate; yeast products, such as yeast extracts, autolysed yeast, hydrolysed yeast; hydrolysed animal and vegetable proteins; choline chloride; amino acids such as L-lysine, L-histidine, L-ornithine; citric acid; malic acid; tartaric acid; fumaric acid; lactic acid; acetic acid; benzoeic acid; adipic acid; gluconic acid; food polymers such as maltodextrin, dextrin, starch, polydextrose, inulin, gum arabic, guar gum, xanthan gum, Karaya gum, carrageenan, agar-agar, pectin, rice flour, sodium alginate, polyethylene glycol, sodium carboxymethyl cellulose, methyl cellulose, proteins, gluten; folic acid; ascorbic acid; glutamic acid; monopotassium L-glutamate; monosodium L-glutamate, monoammonium L-glutamate; calcium di-L-glutamate; magnesium di-L-glutamate; guanylic acid; disodium guanylate; dipotassium guanylate; calcium guanylate; inosinic acid; disodium inosinate; dipotassium inosinate; calcium inosinate; calcium 5'-ribonucleotides; disodium 5'-ribonucleotides, taurine, betaine.

### FOODS

A further subject-matter of the present invention relates to food which contain the preparations according to the invention. In this case it is possible to add the components individually or together, where the addition of the mixture is preferred. With respect to the taste improvement, component (a) can be used alone or as a mixture of (a) and (b).

Examples for foods, in principle, comprise baked goods, e.g. bread, dry biscuits, cakes, other baked products, confectionery (e.g. chocolates, chocolate bar products, other bar products, fruit gum, hard and soft caramels, chewing gum), alcoholic or nonalcoholic beverages (for example, coffee, tea, iced tea, wine, wine-containing beverages, beer, beer-containing beverages, liqueurs, schnapps, brandies, fruit-containing (carbonated) beverages, isotonic (carbonated) beverages, refreshing (carbonated) beverages, nectars, spritzers, fruit and vegetable juices, fruit or vegetable juice formulations), instant beverages (for example, instant cocoa beverages, instant tea beverages, instant coffee beverages, instant fruit beverages), meat products (for example, ham, fresh sausage or uncooked sausage formulations, seasoned or marinated fresh or salted meat products), eggs or egg products (dried egg, egg white, egg yolk), cereal products (for example, breakfast cereals, muesli bars, precooked ready-made rice products), dairy products (for example, milk beverages, butter milk beverages, milk ice cream, yoghurt, kefir, fresh cheese, soft cheese, hard cheese, dried milk powder, whey, whey beverages, butter, buttermilk, products containing partly or completely hydrolysed milk protein), products from soy protein or other soy bean fractions (for example, soy milk and products produced therefrom, fruit beverages with soy protein, soy lecithin-containing formulations, fermented products such as tofu or tempeh or products produced therefrom, soy sauces), products made of other plant-based protein sources, for example, oat protein beverages, fruit formulations (for example, preserves, fruit ice cream, fruit sauces, fruit fillings), vegetable formulations (for example, ketchup, sauces, dried vegetables, frozen vegetables, precooked vegetables, vegetables preserved in vinegar), snack products (for example, baked or fried potato crisps/chips or products based on potato dough, extrudates on a maize or peanut basis), products on a fat and oil basis, or emulsions of the same (for example, mayonnaise, remoulade, dressings), other ready meals and soups (for example, dried soups, instant soups, pre-cooked soups), condiments, seasoning mixtures and, particularly, seasonings, which are used, for example, in the snack industry.

### PHARMACEUTICAL PREPARATIONS

The taste problem described above does not only appear in foods, but also in pharmaceutical products in which the mineral salt needs to be masked particularly carefully. Therefore, a further subject-matter of the invention also relates to pharmaceutical preparations, containing the preparations according to the invention. Also in this case, it is preferred to add component (a) and (b) as a mixture. Preferably, the pharmaceutical preparations are liquid products, particularly cough syrup, antipyretic agents, or antibiotics. Liquid forms of medication are particularly used in children and where the masking of the bitter taste of the active agent is technologically impossible, for example, when applying capsules, tablets or other solid forms of pharmaceuticals.

Both the foods and the pharmaceutical preparations may contain C-methyl flavonoids or a salt of C-methyl flavonoids in concentrations from about 0.01 to 500 ppm, preferably, about 0.05 ppm to 100 ppm, particular preferably 0.1 to 50 ppm

### INDUSTRIAL APPLICATION

A further subject-matter of the invention relates to a process for masking unpleasant taste impressions by replacement of sodium chloride with mineral salts or enhancement of sodium chloride salty taste in foods or pharmaceutical preparations containing these substances, comprising or consisting of the following steps:
(a) Providing food or pharmaceutical preparations containing an inorganic salt with said unpleasant, particularly bitter, astringent taste impressions,
(b) adding 0.01 to 500 ppm of C-methyl flavonoids or a salt of C-methyl flavonoids to them.

Preferably, C-methyl flavonoids, a salt of C-methyl flavonoids and/or an extract containing C-methyl flavonoids is added in quantities such that the concentration of C-methyl flavonoids in the product is from about 0.01 to about 500 ppm, preferably, from about 0.05 ppm to about 100 ppm, particularly preferably from about 0.1 to about 50 ppm. The use of C-methyl flavonoids, a salt of C-methyl flavonoids and/or an extract of C-methyl flavonoids is also claimed for masking unpleasant taste impressions of sodium chloride replacers as well as foods or pharmaceutical preparations containing these substances, in the process of which C-methyl flavonoids, a salt of C-methyl flavonoids and/or an extract containing C-methyl flavonoids is added to these such that the concentration of C-methyl flavonoids in the product is from about 0.01 to about 500 ppm, preferably, from about 0.05 ppm to about 100 ppm, particularly preferably from about 0.1 to about 50 ppm.

### EXAMPLES

### Example 1

### Isolation of C-methylflavonoids from Pinus sp.

### Extraction

360g of dried bark of *Pinus ayacahuite* (collected in El Salvador by ProBioTec Ltd in 2002, sample receipt by AnalytiCon Nov 15^{th}, 2002) was subsequently extracted with methanol : ^{t}butyl methyl ether (1:1) and methanol. Both extracts were combined and dried in vacuum. Yield: 53g.

### Medium pressure liquid chromatography (MPLC)

| | |
|---|---|
| Separation ID: | H-0735 |
| Stationary phase: | RP 18, 40-60µ |
| Mobile phase A: | Water |
| Mobile phase B: | Methanol |
| Gradient: | 67% A to 15% A in 60 min |
| Flowrate: | 80 ml/min |

Collected fractions were analysed by HPLC-MS. Fractions containing C-methyl flavonoids were combined and the solvent was evaporated in vacuum. Yields of relevant fractions: H-0753-C: 3.53g, H-0735-E 0.5 g.

### Preparative HPLC

| | |
|---|---|
| Separation ID: | H-0735-C |
| Stationary phase: | LichrospherSelect B, 10 µm, 250 x 50 mm |
| Mobile Phase A: | 5mMol ammoniumformate buffer, adjusted with formic acid to pH 3.0 |
| Mobile Phase B: | Methanol - acetonitril 1:1 (v/v) with 5 mMol ammoniumformate |
| Gradient: | 24% to 39% B in 57 min |
| Flowrate: | 80 ml/min |
| Detection: | evaporative light scattering detector (ELSD) |
| | |
| Separation ID: | H-0735-E |
| Stationary phase: | LichrospherSelect B, 10 µm, 250 x 50 mm |
| Mobile Phase A: | 5mMol ammoniumformate buffer, adjusted with formic acid to pH 3.0 |
| Mobile Phase B: | Methanol - acetonitril 1:1 (v/v) with 5 mMol ammoniumformate |
| Gradient: | 38% auf 50% B in 60 min |
| Flowrate: | 80 ml/min |
| Detection: | ELSD |

Collected fractions were analysed by HPLC-MS. Fractions containing C-methyl flavonoids were combined and the solvent was evaporated in vacuum and analysed by H-NMR spectroscopy. The following compounds were isolated from the bark of *P. ayacahuite*:

| Ordernummer | Batch | Struktur | Name / CAS | Ausbeute [mg] |
|---|---|---|---|---|
| NP-002055 | H-0735-C-06 | 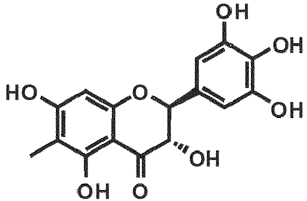 | Cedrin [75513-81-4] | 131 mg |
| NP-012227 | H-0735-C-07 | 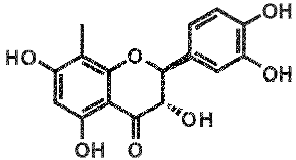 | Deodarin [33788-39-5] | 20 mg |
| NP-012228 | H-0735-C-08 | 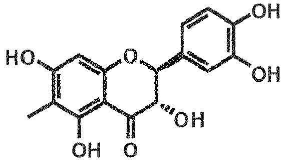 | Cedeodarin [31076-39-8] | 45 mg |
| NP-012356 | H-0735-E-02 | 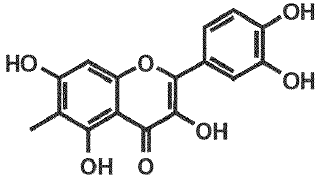 | Pinoquercetin [491-49-6] | 60 mg |

All isolated compounds were characterized by the LCMS method listed in table 1:

**Table 1**

| | | | |
|---|---|---|---|
| LCMS method for analytical characterisation of pure compounds | | | |
| **HPLC System** | PE Series 200 | | |
| **MS System** | Applied Biosystems API 150 | | |
| **Data System** | Analyst 1.3 | | |
| **Stationäre Phase** | Merck Select B 250x4 mm, 5 µm | | |
| **Flussrate** | 1 ml/min | | |
| **Detektion** | (+/(-)-ESI, Fast-Switching-Mode | | |
| | ELSD (Sedex 75) | | |
| | UV (Merck, 254 nm) | | |
| **Sample concentration** | 10 mg/ml in DMSO | | |
| **Injection volume** | 30 µl | | |
| **Mobile Phase:** | A: 5 mM ammonium formiate and 0.1 % formic acid | | |
| | B: Acetonitril/methanol = 1:1, 5 mM ammonium formiate und 0.1 % ammonic acid (pH 3) | | |
| **Gradient** | Time [min] | % A | % B |
| | 00.0 | 85 | 15 |
| | 30.0 | 0 | 100 |
| | 35.0 | 0 | 100 |

### Example 2

### Synthesis of 6-C-Methylquercetin (Pinoquercetin) and 8-C-Methylquercetin

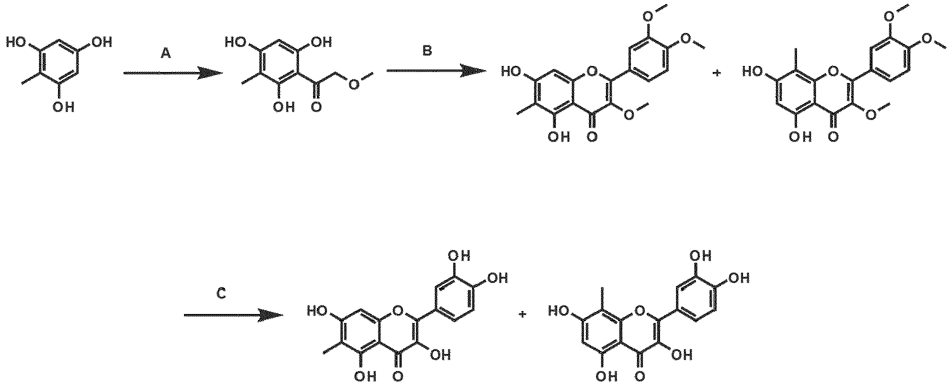

Step A. Synthesis of 2-methoxy-1-(2,4,6-trihydroxy-3-methylphenyl)ethanone 2,4,6-Trihydroxytoluene (5.0 g, 35.6 mmol) was dissolved in dry ether (175 mL) under inert gas, methoxyacetyl chloride (3.59 mL, 39.3 mmol) and aluminium chloride (19.0 g, 142.7 mmol) were added at 0°C. The mixture was stirred overnight at room temperature. After complete conversion the mixture was poured into ice water, the aqueous phase was extracted with diethyl ether several times and the combined extracts were washed with water and dried with sodium sulfate, and the solvent was removed under reduced pressure. The crude product was purified by flash chromatography (Dichloromethane and methanol) to yield the title compound as an off white solid (2.9 g). MS (m/z): 213.1 [M+H⁺]

Step B. Synthesis of 2-(3,4-dimethoxyphenyl)-5,7-dihydroxy-3-methoxy-6-methyl-4H-chromen-4-one and 2-(3,4-dimethoxyphenyl)-5,7-dihydroxy-3-methoxy-8-methyl-4H-chromen-4-one 2-methoxy-1-(2,4,6-trihydroxy-3-methylphenyl)ethanone (2.9 g, 13.6 mmol), fine powdered potassium carbonate (11.3 g, 81.7 mmol), tetrabutylammonium hydrogensulfate (6.9 g, 20.4 mmol), 3,4-dibenzyloxybenzoyl chloride (5.4g, 27.2 mmol) were dissolved in toluene (170 mL) and were stirred at 120°C for 6 h under nitrogen atmosphere. After cooling, the toluene was decanted and water (100 mL) was added to the remaining solid. The aqueous solution was extracted with DCM several times. The combined organic phases were washed with water and were added to the toluene solution. The organic solvents were evaporated under reduced pressure to obtain a brown residue. The residue was dissolved in a 5% potassium carbonate solution and was refluxed for 4 h. After fully conversion, the solvent was evaporated under reduced pressure and the residue was dissolved in water. The pH was adjusted to 5-7 and the aqueous solution was extracted with DCM several times. The combined extracts were washed with water and dried with sodium sulfate, and the solvent was removed under reduced pressure. The crude product was recrystallized from anhydrous ethanol to yield the title compound as an off white solid (1.65 g). MS (m/z): 359.5 [M+H⁺]

Step C. Synthesis of 6-C-Methylquercetin (Pinoquercetin) and 8-C-Methylquercetin 2-(3,4-dimethoxyphenyl)-5,7-dihydroxy-3-methoxy-6-methyl-4H-chromen-4-one and 2-(3,4-dimethoxyphenyl)-5,7-dihydroxy-3-methoxy-8-methyl-4H-chromen-4-one (1.45 g, 4.1 mmol) were dissolved in DCM (80 mL) and the solution was cooled to -10°C. A 1M solution of Boron tribromide in DCM (32.4 mL, 32.5 mmol) was added dropwise and the reaction mixture was stirred at room temperature over night. After fully conversion, water was added at 0°C and the aqueous solution was extracted with DCM several times. The combined organic phases were dried with sodium sulfate and the solvent was removed under reduced pressure to yield the title compound as an off white solid (1.4 g). MS (m/z): 315.1 [M-H⁺]

The synthesized raw product LNB0247-119-A was purified by preparative HPLC:

### MPLC

| | |
|---|---|
| Separation ID: | C-2433 |
| Stationary phase: | RP 18, 40-60µ |
| Sample amount: | 2.84 g |
| Mobile Phase A: | Water |

| | |
|---|---|
| Mobile Phase B: | Methanol |
| Gradient: | 75% A to 10% A in 60 min |
| Flowrate: | 80 ml/min |

### Preparative HPLC

| | |
|---|---|
| Separation ID: | C-2433-D |
| Stationary phase: | Kromasil C18, 10 µm, 250 x 50 mm |
| Sample amount: | 1.01 g |
| Mobile Phase A: | Water |
| Mobile Phase B: | Acetonitril |
| Gradient: | 31% auf 43% B in 57 min |
| Flowrate: | 109 ml/min |
| Detection: | ELSD |

Collected fractions were analysed by HPLC-MS. Fractions containing C-methyl flavonoids were combined and the solvent was evaporated in vacuum and analysed by H-NMR spectroscopy. The following compounds were isolated:

| Ordernumber | Batch | structure | name / CAS | yield [mg] |
|---|---|---|---|---|
| NP-021118 | C-2433-D-01 | 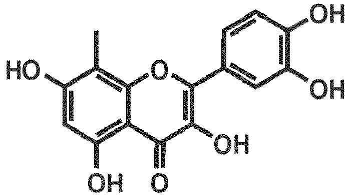 | 8-C-Methyl-Quercetin [54987-82-5} | 224 |
| NP-012356 | C-2433-D-02 | 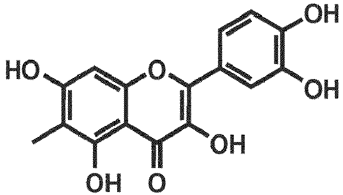 | 6-C-Methyl-Quercetin [491-49-6] | 298 |

### Example 3

### Synthesis of Deodarin and Cedeodarin as racemic mixtures

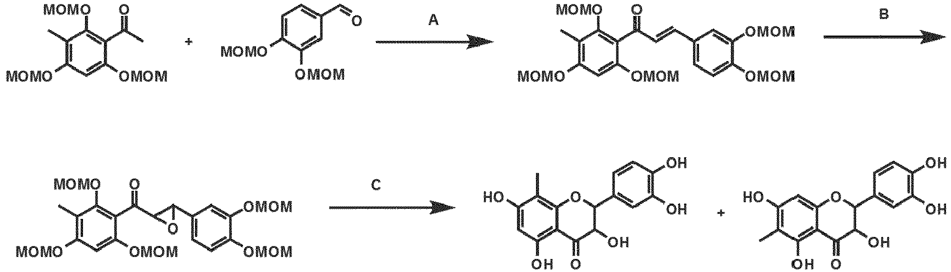

Step A. Synthesis of (E)-3-(3,4-bis(methoxymethoxy)phenyl)-1-(2,4,6-tris(methoxymethoxy)-3-methylphenyl)prop-2-en-1-one Potassium hydroxide (2.9 g, 51.5 mmol) was dissolved in dry methanol (30 mL) under argon atmosphere. 1-(2,4,6-tris(methoxymethoxy)-3-methylphenyl)ethanone [Hossaln, M. A. et al. Bangladesh Journal of Scientific and Industrial Research 1998, 33, 94-96] (771 mg, 2.45 mmol) and 3,4-bis(methoxymethoxy)benzaldehyde [Du, G. et al. ChemMedChem 2017, 12, 183-193] (560 mg, 2.48 mmol) were dissolved in dry methanol (5 mL) and was added to the solution dropwise. The reaction mixture was stirred at room temperature overnight and after fully conversion water was added. The aqueous phase was extracted with ethyl acetate several times, the combined organic phases were washed with water, dried with sodium sulfate, and the solvent was removed under reduced pressure. The crude product was purified by flash chromatography (Heptane and ethyl acetate) to yield the title compound as a white solid (980 mg).MS (m/z): 213.1 [M+H⁺]

Step B. Synthesis of (3-(3,4-bis(methoxymethoxy)phenyl)oxiran-2-yl)(2,4,6-tris(methoxymethoxy)-3-methylphenyl)methanone (E)-3-(3,4-bis(methoxymethoxy)phenyl)-1-(2,4,6-tris(methoxymethoxy)-3-methylphenyl)prop-2-en-1-one (980 mg, 1.8 mmol) was dissolved in dry methanol (23 mL), a 2M sodium hydroxide solution (1.2 mL) and 30% hydrogen peroxide solution (1.19 mL, 39.6 mmol) were added and the reaction mixture was stirred at room temperature for 2 h. After fully conversion water was added and the aqueous phase was extracted with ethyl acetate several times. The combined organic phases were washed with water, dried with sodium sulfate, and the solvent was removed under reduced pressure to yield the title compound as a white solid (1000 mg). MS (m/z): 561.4 [M+Na⁺]

Step C. Synthesis of Deodarin and Cedeodarin (3-(3,4-bis(methoxymethoxy)phenyl)oxiran-2-yl)(2,4,6-tris(methoxymethoxy)-3-methylphenyl)methanone (320 mg, 0.59 mmol) was dissolved in a mixture of methanol, thf and conc. HCI (8 mL, 3 mL, 0.15 mL) and the reaction mixture was stirred at 55°C for 2 h. After full conversion water was added and the aqueous phase was extracted with ethyl acetate for several times. The combined organic phases were dried with sodium sulfate and the solvent was removed under reduced pressure to yield the title compound as an off white solid (216 mg). MS (m/z): 317.2 [M-H⁺]

The synthesized raw product LNB0276-152-fr30-42was purified by preparative HPLC:

### Preparative HPLC

| | |
|---|---|
| Separation ID: | C-2826-M |
| Stationary phase: | Kromasil C18, 10 µm, 250 x 50 mm |
| Sample amount: | 0.46 g |
| Mobile Phase A: | Water |
| Mobile Phase B: | Acetonitril |
| Gradient: | 35% auf 45% B in 57 min |
| Flowrate: | 80 ml/min |
| Detection: | ELSD |

Collected fractions were analysed by HPLC-MS. Fractions containing C-methyl flavonoids were combined and the solvent was evaporated in vacuum and analysed by H-NMR spectroscopy. The following compounds were isolated:

| Order number | Batch | Structure | Name / CAS | yield [mg] |
|---|---|---|---|---|
| NP-012227 | C-2826-N-01 | 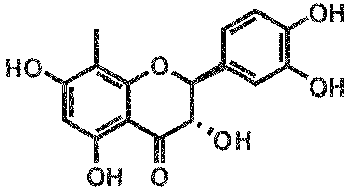 | Deodarin [33788-39-5] (as racemic mixture) | 14 |
| NP-012228 | C-2826-N-02 | 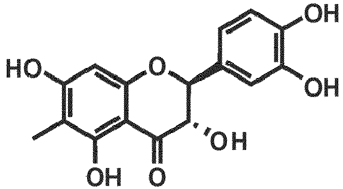 | Cedeodarin [31076-39-8] (as racemic mixture) | 127 |

### EXAMPLE 3

### In-vitro assay

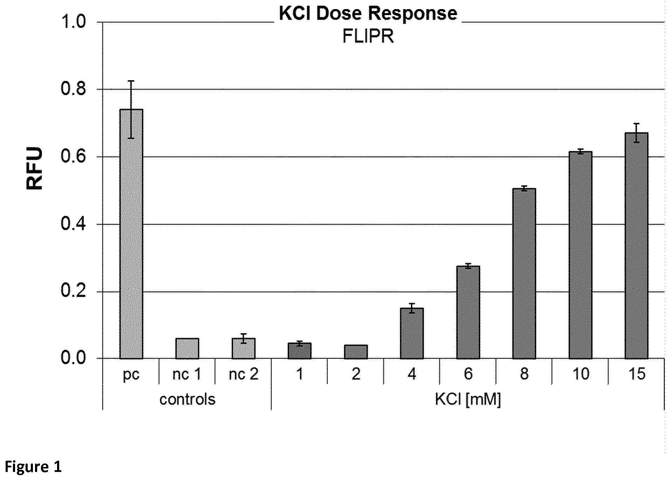

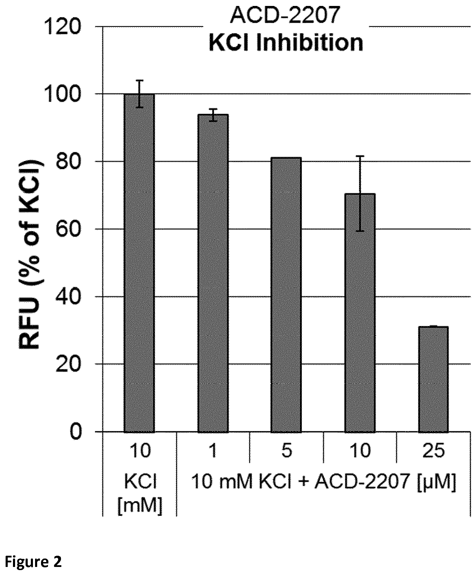

A human cell based assay system ScreenLine® based on lingual cells was established. The activation of these cells was quantified in order to detect natural substances which reduce the bitterness of potassium chloride. The change of the intracellular calcium level was measured for quantitation of the activation of the ScreenLine® (see figure 1 and 2).

### Establishment of the cell-based measurement system

In order to detect substances with inhibitory activity, a high-throughput cell-based *in-vitro* measurement system was established. To this end, ScreenLine® was used that was feasible for this application based on Hochheimer, A., Krohn, M., Rudert, K., Riedel, K., Becker, S., Thirion, C. and Zinke, H. "Endogenous gustatory responses and gene expression profile of stably proliferating human taste cells isolated from fungiform papillae" Chem Senses, 39, 359-377 (2014**).**

### EXAMPLE 4

### The natural taste of high-purity C-methyl flavonoids and of extracts containing C-methyl flavonoids

The sensory evaluation of the samples was performed by a panel of five experienced assessors. The sensory tests were performed descriptively, randomized, blinded, and by means of a "sip and spit" method. To this end, the sample is moved within the mouth for a few seconds to evaluate its taste, and it is not swallowed but expectorated. The results may be taken from the following **Table 2a**:

**Table 2a**

| Tasting of high-purity C-methyl flavonoids acid | | |
|---|---|---|
| **Test method** | Descriptive evaluation, "sip and spit" method, blinded and randomised samples, pH neutral | |
| **Test sample** | Purified C-methyl flavonoids acid, purity > 98% | |
| **Panelists** | 5-7 experienced assessors | |
| **Preparation of the samples** | Four different concentrations (1 µM, 10 µM, 25 µM, and 50 µM, or approximately 0.3, 3.2, 8 and 16 ppm, respectively) dissolved in spring water | |
| **Evaluation** | 1 µM (0.3 ppm) | clean flavor |
| | 10 µM (3.2 ppm) | quite clean flavour, very slight chemical note |
| | 25 µM (8 ppm) | quite clean flavour, very slight bitterness |
| | 50 µM (16 ppm) | quite clean flavour, slight floral note, slight bitterness & drying |

**Table 2b**

| Tasting of extracts containing C-methyl flavonoids acid | | | | |
|---|---|---|---|---|
| **Test method** | Descriptive evaluation, "sip and spit" method, blinded and randomised samples, pH neutral | | | |
| **Test sample** | 1) purified C-methyl flavonoids acid, purity > 98% | | | |
| | 2) commercially available C-methyl flavonoids acid, purity 85 % (HPLC) | | | |
| | 3) extract with ca. 25 % C-methyl flavonoids acid | | | |
| **Panelists** | 3-5 experienced assessors | | | |
| **Preparation of the samples** | Three different concentrations (dissolved in 0.5% ethanol), comparison sample 0.5% ethanol in water, final concentration of the ethanol below 0.5% | | | |
| **Evaluation** | Conc. | Sample 1 | Sample 2 | Sample 3 |
| | 3 mg/l | neutral | neutral | neutral |
| | 7.5 mg/l | neutral | neutral | slightly bitter |
| | 30 mg/l | slightly bitter | slightly bitter | More bitter than samples 1 and 2, resinous |

### EXAMPLE 5

### Taste of the combination of C-methyl flavonoids with potassium chloride

The sensory evaluation of the samples was performed twice by a team of seven experienced assessors. The results may be taken from the following **Table 3:**

**Table 3**

| Tasting of high-purity C-methyl flavonoids acid + potassium chloride (KCl) | | |
|---|---|---|
| **Test method** | Descriptive and discriminative evaluation, "sip and spit" method, blinded and randomised samples, pH neutral, | |
| | confidence scoring: only guessed, not sure, fairly sure, very sure | |
| | recorded: sensory descriptions of assessors | |
| **Test sample** | Purified C-methyl flavonoids acid, purity > 98% (ACD-2207) | |
| **Panelists** | 7 experienced assessors, trained to recognise the off-flavour, in particular the bitterness, of potassium chloride | |
| **Preparation of the samples** | Four different concentrations of C-methyl flavonoids acid (1 µM, 10 µM, 25 µM, and 50 µM) with 1.5 % potassium chloride dissolved in spring water | |
| **Evaluation** | Two assessments with 7 assessors were carried out. This resulted in 14 data points/responses. | |
| | 1 µM (0.3 ppm) | bitterness of KCl is reduced by the product in 64% of responses average confidence score: fairly sure to very sure |
| | | dominant flavours: saltiness, enhanced saltiness |
| | 10 µM (3.2 ppm) | bitterness of KCl is reduced by the product in 64% of responses average confidence score: fairly sure to very sure |
| | | dominant flavour: saltiness |
| | 25 µM (8 ppm) | bitterness of KCl is reduced by the product in 64% of responses average confidence score: fairly sure |
| | | dominant flavour: saltiness |
| | 50 µM (16 ppm) | bitterness of KCl is reduced by the product in 71% of responses average confidence score: fairly sure |
| | | dominant flavour: saltiness |

### EXAMPLE 6

### Taste modulation of crackers

The sensory evaluation of the samples was performed by 15 naive as well as experienced assessors. Details may be taken from the following **Table 4**:

**Table4**

| Taste evaluation of cracker salted with potassium chloride | |
|---|---|
| **Test method** | Descriptive evaluation |
| **Test sample** | Purified C-methyl flavonoids acid, purity > 98% (ACD-2207) |
| **Panelists** | 15 naïve as well as experienced |
| **Preparation of the samples** | Cracker |
| | 150g flower type 405 |
| | 35g neutral plant oil |
| | 25ml water |
| | 25ml red wine |
| | 6g curcuma |
| | 2g herbs |
| | 20g sesam |
| | 3,6g KCl for 1.5% KCl or 2.4g KCl for 1% KCl |
| | +/- 3 mg ACD-2207 (^{∼}10-15 ppm) |
| **Evaluation** | Cracker with ACD-2207 was preferred, due to reduced off-flavours, enhanced saltiness as well as improved aroma profile. |

The sensory profile of the cracker with potassium chloride was strongly improved by the product. The product would enable a strong reduction of sodium chloride content in crackers and related categories.

### EXAMPLE 7

### Taste modulation of vegetable bouillon

The sensory evaluation of the samples was performed by 6 naïve assessors. Details may be taken from the following **Table 5:**

**Table 5**

| Taste evaluation of vegetable broth salted with potassium chloride | |
|---|---|
| **Test method** | Descriptive evaluation |
| **Test sample** | Purified C-methyl flavonoids acid, purity > 98% (ACD-2207) |
| **Panelists** | 6 naïve assessors |
| **Preparation of the samples** | 2.25 g vegetable broth |
| | 1.2 g potassium chloride |
| | 0.45 g sodium chloride |
| | 3.8 mg ACD-2207 (∼25 ppm) |
| | ad 150 ml tap water |
| **Evaluation** | Soup with ACD-2207 was preferred, due to reduced off-flavours, enhanced saltiness as well as improved aroma profile. |

The sensory profile of the soup salted with potassium chloride was strongly improved by the product. This was also evident in soups containing a small amount of sodium chloride. Thus, the product would enable a strong reduction of sodium chloride content in soups and related categories.

## Claims

1. Preparations, comprising
(a) C-methyl flavonoids, a salt of C-methyl flavonoids and/or an extract containing C-methyl flavonoids, and
(b) at least one inorganic salt or mineral substance.

2. The preparations of claim 1, **characterised in that** the C-methyl flavonoids are selected from the group comprising Cedrin, Deodarin, Cedeodarin, Pinoquercetin, 8-C-Methyl-Quercetin, 6-C-Methyl-Quercetin.

3. The preparations of claims 1 or 2, **characterised in that** the salt of C-methyl flavonoids are selected from the group comprising the alkali metals salts, alkaline earth metals salts or ammonium salts.

4. The preparations of at least one of claims 1-3, **characterised in that** the extract containing C-methyl flavonoids are obtained from plants belonging to the plant genus *Pinus* by extraction with solvents selected from the group consisting of water, C₁ to C₄ alcohols, acetone, methyl ethyl ketone, ^{t}butyl methyl ether, and ethyl acetate or their mixture.

5. The preparations of at least one of claims 1 to 4, **characterised in that** the mineral substances are selected from the group consisting of potassium, magnesium and calcium salts and their mixtures.

6. The preparations of claim 5, **characterised in that** the mineral substance is potassium chloride.

7. The preparations of at least one of claims 1-6, **characterised in that** the preparation comprises component (a) in concentration of from about 0.01 to about 500 ppm.

8. The preparations of at least one of claims 1-7, **characterised in that** the preparation comprises component (b) in concentration of from 0.01 wt% to 5 wt%.

9. Food containing the preparations of claim 1.

10. The food of claim 9 representing bakery products or soups.

11. Pharmaceutical preparations containing the preparations of claim 1.

12. The pharmaceutical preparations of claim 11 are in liquid form.

13. The food of claim 10 or the pharmaceutical preparations of claim 12, **characterised in that** they contain C-methyl flavonoids or a salt of C-methyl flavonoids in concentrations of from about 0.01 to about 500 ppm.

14. A process for masking unpleasant, particularly bitter, astringent taste impressions of inorganic salts and food or pharmaceutical preparations containing these salts comprising or consisting of the following steps:
(a) Providing food or pharmaceutical preparations containing an inorganic salt with said unpleasant, particularly bitter, astringent taste impressions,
(b) adding 0.01 to 500 ppm of C-methyl flavonoids or a salt of C-methyl flavonoids to them.

15. Use of C-methyl flavonoids acid, a salt of C-methyl flavonoids and/or an extract containing C-methyl flavonoids for masking unpleasant, particularly bitter, astringent and/or liquorice-like taste impressions of inorganic salts and of food or pharmaceutical preparations containing these substances.
